# EUROPÄISCHE PATENTSCHRIFT

(11) **EP 1 483 945 B1**
(45) Veröffentlichungstag und Bekanntmachung des Hinweises auf die Patenterteilung: **20.12.2006**
(21) Anmeldenummer: 03704412.0
(22) Anmeldetag: 16.01.2003
(51) Int. Cl.: H05B 41/288, H05B 41/38

(54) **ZÜNDSCHALTUNG FÜ R EINE HOCHDRUCKENTLADUNGSLAMPE**
IGNITION CIRCUIT FOR A HIGH PRESSURE DISCHARGE LAMP
CIRCUIT D'ALLUMAGE POUR UNE LAMPE A DECHARGE A HAUTE PRESSION

(30) Priorität: 11.03.2002 DE 10210629
(43) Veröffentlichungstag der Anmeldung: 08.12.2004
(73) Patentinhaber: TridonicAtco Schweiz AG, 8755 Ennenda (CH)
(72) Erfinder: HUBER, Martin, CH-8854 Siebnen (CH); RAST, Urs, CH-8753 Mollis (CH); MÄCHLER, Erich, CH-8854 Siebnen (CH)
(74) Vertreter: Rupp, Christian
(86) Internationale Anmeldenummer: PCT/EP2003/000413
(87) Internationale Veröffentlichungsnummer: WO 2003/077615

(56) Entgegenhaltungen:
- EP-A- 0 903 967
- WO-A-00/18197
- WO-A-99/05889
- US-A- 5 932 976

## Beschreibung

Die vorliegende Erfindung bezieht sich auf eine Schaltungsanordnung zum Zünden einer Hochdruckentladungslampe in einem elektronischen Vorschaltgerät. Als Zündspannung können Werte zwischen 3 und 5 Kilovolt erforderlich sein. Die Zündspannung wird allgemein ausgehend von einer DC-Spannung mit einer Vollbrückenschaltung erzeugt.

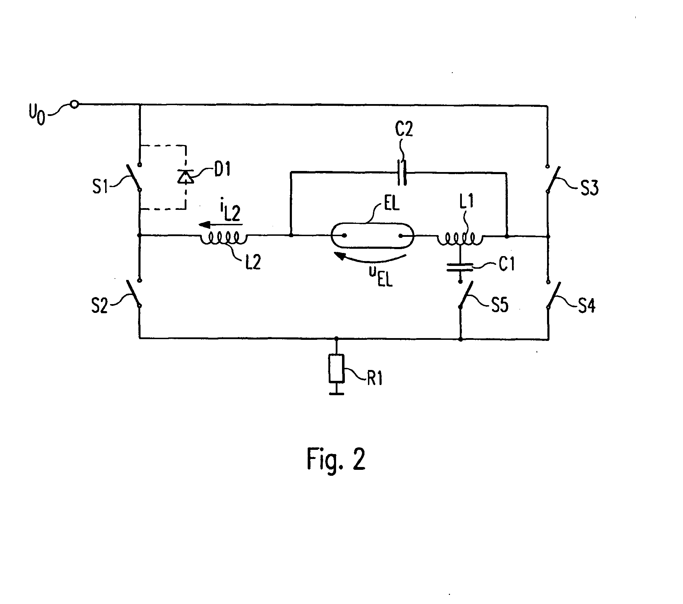

Zuerst soll Bezug nehmend auf Fig. 2 eine Schaltungsanordnung erläutert werden, wie sie aus der WO00/18197 bekannt ist.

Es sei bereits hier angemerkt, dass die Schaltvorgänge bezüglich der FET-Schalter bei der vorliegenden Erfindung denen der WO00/18197 entsprechen, so dass bezüglich dieser Ansteuerung ausdrücklich auf die genannte WO-Schrift Bezug genommen wird.

Die in Fig. 2 gezeigte Schaltungsanordnung umfasst steuerbare Schalter S1-S4, die zu einer Vollbrücke verschaltet sind. An die Vollbrücke ist eine Gleichspannung U₀ angelegt, die von einer geeigneten Gleichspannungsquelle des entsprechenden elektronischen Vorschaltgeräts stammt, in dem die Schaltungsanordnung verwendet wird. Zu den Schaltern S1-S4 sind jeweils Freilaufdioden parallel geschaltet, wobei der Einfachheit halber in Fig. 2 lediglich die dem Schalter (Leistungstransistor) S1 parallel geschaltete Freilaufdiode D1 dargestellt ist. Als Schalter S1-S4 werden bevorzugt Feldeffekttransistoren verwendet, die bereits Freilaufdioden enthalten. In dem Brückenzweig der in Fig. 2 gezeigten Vollbrücke ist eine anzusteuernde Gasentladungslampe EL, insbesondere eine Hochdruck-Gasenladungslampe, angeordnet. Die in Fig. 2 gezeigte Schaltungsanordnung ist insbesondere für den Betrieb für Metallhalogen-Hochdruckgasentladungslampen geeignet, die besonders hohe Zündspannungen (zwischen 3 und 5 kV) benötigen. Hochdruck-Gasentladungslampen unterscheiden sich von Niederdruck-Gasentladungslampen insbesondere dadurch, dass sie eben höhere Zündspannungen benötigen und in ihrem kleineren Lampenkörper ein höherer Druck auftritt. Desweiteren weisen Hochdruck-Gasentladungslampen eine höhere Leuchtdichte auf, wobei sich jedoch die Farbtemperatur der jeweiligen Hochdruck-Gasentladungslampe mit der zugeführten Leistung ändert. Elektronische Vorschaltgeräte für Hochdruck-Gasentladungslampen sollten daher einerseits hohe Zündspannungen bereitstellen und andererseits eine Konstanthaltung der zugeführten Leistung ermöglichen.

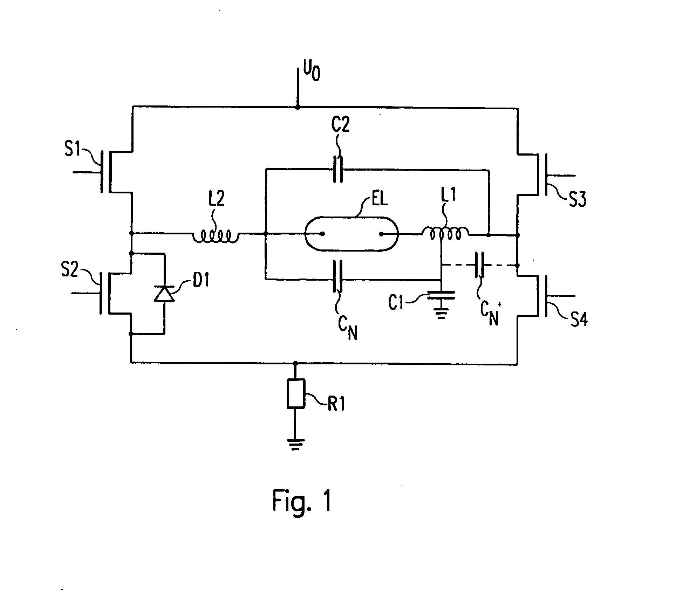

Mit dem Brückenzweig der in Fig. 2 dargestellten Vollbrücke ist ein Serienresonanzkreis gekoppelt, der eine Induktivität L1 und Kapazität C1 umfasst, wobei die Kapazität C1 an einen Anzapfungspunkt der Induktivität L1 angreift und parallel zu dem Schalter S4 geschaltet ist. Darüber hinaus ist eine Glättungs- oder Filterschaltung vorgesehen, die eine weitere Induktivität L2 und eine weitere Kapazität C2 aufweist, wobei diese Bauelemente wie in Fig. 1 gezeigt, verschaltet sind. An die Vollbrücke kann weiterhin ein Widerstand R1 angeschlossen sein, der als Strommess- oder Shunt-Widerstand dient.

Der zuvor erwähnte Serienresonanzkreis mit der Induktivität L1 und der Kapazität C1 dient in Kombination mit der weiteren Kapazität C2 insbesondere zum Zünden der Gasentladungslampe EL. Zu diesem Zweck wird der Serienresonanzkreis in Resonanz angeregt, das heißt eine der Resonanzfrequenz entsprechende Frequenz wird der Lampe zugeführt. Die Anregung des Resonanzkreises erfolgt durch abwechselndes Schalten der Schalter S3 und S4.

Zum Zünden der Gasentladungslampe EL werden zwei unmittelbar in Serie geschaltete Schalter, bspw. die Schalter S1 und S2, mit Hilfe einer geeigneten Steuerschaltung (nicht gezeigt) geöffnet und der Schalter S5, der sich in Serie mit der Kapazität C1 befindet, geschlossen. Die beiden anderen Schalter, bspw. die Schalter S3 und S4, der Vollbrücke werden abwechselnd geöffnet und geschlossen, wobei dies mit einer relativ hohen Frequenz erfolgen kann. Die Schaltfrequenz wird langsam in Richtung auf die Resonanzfrequenz des durch die Induktivität L1 und die Kapazität C1 gebildeten Serienresonanzkreises abgesenkt. Die Zündspannung der Gasentladungslampe EL wird in der Regel bereits vor Erreichen der Resonanzfrequenz erreicht. In diesem Fall wird die Schaltfrequenz für die Schalter S3 und S4 auf dieser Frequenz gehalten bis die Lampe EL zündet. Die in der rechten Hälfte von L1 abfallende Spannung wird aufgrund des durch die Induktivität L1 realisierten Spartransformatorprinzips bspw. im Verhältnis 1:2 auf die linke Hälfte, die mit der Gasentladungslampe EL gekoppelt ist, hochtransformiert, wobei die an der linken Hälfte der Induktivität L1 auftretende Spannung die tatsächliche Zündspannung für die Gasentladungslampe EL bildet, die über die Kapazität C2 an die Lampe angelegt wird. Um das Zünden der Gasentladungslampe EL zu erfassen, wird die an dem Anzapfungspunkt der Induktivität L1 abfallende Spannung gemessen, welche proportional zur Zünd- bzw. Lampenspannung ist, da nach dem Zünden der Lampe EL diese dämpfend auf den Serienresonanzkreis wirkt. Nach erfolgter Zündung der Gasentladungslampe EL wird der Schalter S5 für den nachfolgenden Normalbetrieb geöffnet.

Zum Zünden der Hochdrucklampe werden also die Schalter diagonal gegenüberliegend wechselweise mit einer hohen Frequenz ein- und ausgeschaltet, wobei zunächst der Schalter S5 geschlossen ist. Die Zündfrequenz wird auf den Serienresonanzkreis abgestimmt, der durch C1 und den rechten Teil des Spartransformators L1 gebildet ist. Sobald eine Zündung detektiert ist, wird der Schalter S5 geöffnet, und die Schaltfrequenz der gegenüberliegenden Schalter wird entsprechend drastisch reduziert.

Der Schalter S5 hat dabei die folgende weitere Funktion. Wenn beim Zündvorgang festgestellt wird, dass der Betrieb der Lampe kapazitiv wird, so wird der Schalter S5 geöffnet, mit der Folge, dass nicht mehr der Serienschwingkreis C1, L1 die Resonanzfrequenz bestimmt, sondern vielmehr der Serienschwingkreis (Glättungs-Filterschaltung) C2, L2, dessen Resonanzfrequenz wesentlich niedriger liegt. Dadurch wird sofort von dem kapazitiven in den induktiven Bereich geschaltet. Der zu vermeidende kapazitive Betrieb beim Zünden hat nämlich den Nachteil, dass die zu dem Schalter S5 parallel geschaltete Freilaufdiode (in Fig. 1 nicht gezeigt) zerstört werden kann, wodurch die gesamte Schaltungsanordnung und dementsprechend auch das gesamte elektronische Vorschaltgerät betriebsunfähig werden können. Der vorstehend für S5 beschriebene Nachteil gilt im Übrigen auch für die anderen Schalter S1 - S4.

Eine Schaltungsanordnung gemäß Oberbegriffs von Anspruch 1 ist ebenfalls aus US 5 932 976 bekannt.

Ausgehend von diesem Stand der Technik ist es Aufgabe der vorliegenden Erfindung, die aus der WO00/18197 bekannte Schaltungsanordnung kostengünstiger auszugestalten.

Diese Aufgabe wird erfindungsgemäß durch die Merkmale des unabhängigen Anspruchs gelöst. Die abhängigen Ansprüche bilden den zentralen Gedanken der Erfindung in besonders vorteilhafter Weise weiter.

Ansatzpunkt für die vorliegende Erfindung ist, den Schalter S5 wegzulassen. Um dennoch ein Zünden zu ermöglichen und gleichzeitig den nachteiligen kapazitiven Betrieb beim Zünden der Lampe zu vermeiden, der einerseits mit dem Verbindungspunkt der Kapazität und der Induktivität des Serienresonanzkreises und andererseits mit dem Verbindungspunkt von zwei verbundenen Schaltern der Vollbrücke verbunden ist.

Erfindungsgemäß ist also eine Schaltungsanordnung zum Betreiben einer Gasentladungslampe vorgesehen, die eine Vollbrückenschaltung aufweist, an die eine Gleichspannung angelegt ist und die vier steuerbare Schalter umfasst, wobei ein erster Schalter mit einem zweiten Schalter und ein dritter Schalter mit einem vierten Schalter in Serie geschaltet sowie der erste Schalter mit dem dritten Schalter und der zweite Schalter mit dem vierten Schalter verbunden ist, und wobei eine Gasentladungslampe in einem Brückenzweig, der einen Knotenpunkt zwischen dem ersten Schalter und dem zweiten Schalter mit einem Knotenpunkt zwischen dem dritten Schalter und dem vierten Schalter verbindet, anzuordnen ist. Weiterhin ist ein Serienresonanzkreis mit der Lampe gekoppelt, der eine in den Brückenzweig geschaltete Induktivität mit einer an einem Anzapfungspunkt daran angreifenden Kapazität umfasst. Eine Zusatz-Kapazität ist zwischen dem Verbindungspunkt der Kapazität und der Induktivität des Serienresonanzkreises und des ersten mit dem zweiten Schalter, dem des Induktivität des Serienresonanzkreises gegenüberliegenden Anschluß der Lampe oder dem Verbindungspunkt des dritten mit dem vierten Schalters verbunden.

Eine Steuerschaltung führt vor dem Normalbetrieb der Gasentladungslampe eine Aufwärmphase der Gasentladungslampe durch, während abwechselnd der erste und vierte Schalter und dazu komplementär der zweite und dritte Schalter mit ein-und ausgeschaltet wird.

Eine Steuerschaltung kann derart ausgestaltet sein, dass vor dem Normalbetrieb der Gasentladungslampe ein Zündbetrieb durchgeführt wird, um die Gasentladungslampe zu zünden, wobei die Steuerschaltung während des Zündbetriebs den ersten und zweiten Schalter öffnet und den dritten und vierten Schalter abwechselnd mit einer Frequenz ein- und ausschaltet, die im Wesentlichen der Resonanzfrequenz des mit der Gasentladungslampe gekoppelten Serienresonanzkreises entspricht.

Die Steuerschaltung kann derart ausgestaltet sein, dass sie während des Zündbetriebs den dritten und vierten Schalter zunächst mit einer höheren Frequenz als der Resonanzfrequenz des Serienresonanzkreises ein- und ausschaltet und diese Frequenz anschließend in Richtung der Resonanzfrequenz des Serienresonanzkreises absenkt.

Die Steuerschaltung kann derart ausgestaltet sein, dass sie ein Zünden der Gasentladungslampe erfasst und nach Erfassen der Zündung von dem Zündbetrieb in den Aufwärmbetrieb umschaltet.

Die Steuerschaltung kann derart ausgestaltet sein, dass sie nach Erwärmung der Gasentladungslampe auf eine bestimmte Betriebstemperatur vom Aufwärmbetrieb in den Normalbetrieb umschaltet.

Die Steuerschaltung kann dabei zum Erfassen der Zündung der Gasentladungslampe die Zündspannung oder eine davon abhängige Größe erfassen.

Die Steuerschaltung kann zur Erfassung des Zündens der Gasentladungslampe die an dem Anzapfungspunkt zwischen der Kapazität und der Induktivität des Serienresonanzkreises abfallenden Spannung erfassen.

Die Induktivität des Serienresonanzkreises kann derart dimensioniert sein, dass sie im Normalbetrieb in der Sättigung betrieben wird, so dass die Induktivität des Serienresonanzkreises im Normalbetrieb eine vernachlässigbare Induktivität bildet.

Die Induktivität des Serienresonanzkreises kann eine Spule mit einem Eisenkern umfassen, der im Normalbetrieb gesättigt ist.

Mit dem Brückenzweig der Vollbrücke kann eine Glättungsschaltung gekoppelt sein.

Die Glättungsschaltung kann eine in Serie mit der Gasentladungslampe indem Brückenzweig angeordnete Spule sowie eine zu der Gasentladungslampe parallel geschalteten Kondensator umfassen.

Die steuerbaren Schalter der Vollbrückenschaltung können Feldeffekttransistoren mit Freilaufdioden sein.

Die Steuerschaltung kann für einen Normalbetrieb der Gasentladungslampe mit einer ersten Frequenz abwechselnd zwischen einem ersten und einem zweiten Zustand umschalten, wobei während des ersten Zustands der erste und vierte Schalter geöffnet sind, der zweite Schalter mit einer zweiten Frequenz, die höher als die erste Frequenz ist, abwechselnd ein- und ausgeschaltet wird und der dritte Schalter mindestens dann geschlossen ist, wenn auch der zweite Schalter geschlossen ist, und wobei während des zweiten Zustands der zweite und dritte Schalter geöffnet sind, der erste Schalter mit der zweiten Frequenz abwechselnd ein- und ausgeschaltet wird und der vierte Schalter mindestens dann geschlossen ist, wenn auch der erste Schalter geschlossen ist.

Die Steuerschaltung kann einen in den Brückenzweig fließenden Zweigstrom überwachen und in dem ersten Zustand den zweiten Schalter bzw. in dem zweiten Zustand den ersten Schalter immer dann schließen, wenn der Zweigstrom einen minimalen Wert erreicht hat.

Der Kapazitätswert der Zusatzkapazität ist größer gewählt als der Kapazitätswert der Kapazität des Serienresonanzkreises.

Der Kapazitätswert der Kapazität der Glättungsschaltung kann größer gewählt sein als der Kapazitätswert der Zusatzkapazität.

Weitere Merkmale, Vorteile und Eigenschaften der vorliegenden Erfindung sollen nunmehr Bezug nehmend auf Fig. 1 näher erläutert werden, die ein bevorzugtes Ausführungsbeispiel der vorliegenden Erfindung zeigt.

Wie durch einen Vergleich der Figuren 1 und 2 so verdeutlicht wird, ist der Schalter S5 gemäß dem Stand der Technik weggelassen und sozusagen dauerhaft überbrückt. Der Kondensator C1 des Serienresonanzkreises bestehend aus dem Spartransformator L1 und eben diesem Kondensator C1 ist mit einem Ende weiterhin mit Masse verbunden.

Dafür ist ein Zusatzkondensator C_{N} vorgesehen, der einerseits mit dem Verbindungspunkt zwischen der Induktivität L1 und der Kapazität C1 des Serienresonanzkreises verbunden ist. Andererseits ist der Zusatzkondensator C_{N} an dem Verbindungspunkt zwischen den Schaltern S1 und S2 bzw. dem Verbindungspunkt zwischen der Induktivität L2 sowie der Kapazität C2 der Glättungs- bzw. Filterschaltung vorgesehen (die im Übrigen einen eigenen Serienresonanzkreis bildet).

Alternativ kann wie in Fig. 1 strichliniert dargestellt die Zusatzkapazität C_{N} auch zwischen einem Verbindungspunkt zwischen der Induktivität L1 und der Kapazität C1 des Serienresonanzkreises und einen Verbindungspunkt des dritten und vierten Schalters S3 bzw. S4 verbunden sein. Diese Zusatzkapazität C_{N}-, die also alternativ oder zusätzlich der bereits erläuterten Zusatzkapazität C_{N} vorgesehen sein kann, ist somit parallel zu dem in Fig. 1 rechten Zweig des Spartransformators L₁ geschaltet. Die bereits erläuterte Zusatzkapazität C_{N} ist dagegen parallel zu der Gasentladungslampe EL und dem linken Zweig des Spartransformators L1 geschaltet, indem die Zündspannung transformiert wird.

Es sei nochmals betont, dass ein Schaltschema bezüglich der Schalter S1 - S4 verwendet werden kann, wie es in der Schrift WO00/18197 beschrieben ist. Es wird daher ausdrücklich auf das in dieser Schrift detailliert beschriebenen Schaltschema Bezug genommen. Grundsätzlich sind aber auch andere Schaltvorgänge anwendbar.

Der Kapazitätswert des Zusatzkondensators C_{N} ist größer gewählt als der des Kondensators C1 des Serienresonanzkreises. Andererseits ist allerdings der Kapazitätswert des Zusatzkondensators C_{N} kleiner als der des Kondensators C2 der Glättungs-Filterschaltung gewählt.

Es gilt somit die folgende Gleichung:
C2 > C_{N} > C1

Die Resonanzfrequenz zum Zündzeitpunkt wird somit bestimmt durch die Induktivität L1, die Kapazität C1 sowie die Zusatzkapazität C_{N}. Die Zusatzkapazität C_{N} überbrückt dabei einen Teil des Spartransformators L1. Die Kapazität C1 des Serienresonanzkreises geht von dem Mittelabgriff aus auf Masse.

Durch das Vorsehen der Zusatzkapazität C_{N} kann -bei konstanter Resonanzfrequenz im Vergleich zum Stand der Technik- der Kapazitätswert von C1 verringert werden, so dass in vorteilhafter Weise für die Kapazität C1 ein kleinerer (billigerer) Kondensator verwendet werden kann. Ein weiterer Kostensparungseffekt tritt dadurch ein, dass der nunmehr nicht mehr notwendige Schalter S5 ein teures Bauteil ist, insbesondere im Vergleich zu dem nunmehr notwendigen Zusatzkondensator C_{N}.

Dadurch, dass -wie bereits erwähnt- der Kapazitätswert des Kondensators C1 des Serienresonanzkreises reduziert werden kann, verringert sich die Resonanzfrequenz des Serienresonanzkreises, wodurch der kapazitive Betrieb während des Zündens der Lampe auf jeden Fall sicher vermieden werden kann.

Ebenfalls bedingt durch die Verringerung des Kapazitätswerts des Kondensators C1 (im Vergleich zum Stand der Technik) kann nunmehr der auch im Normalbetriebszustand (d.h. nach dem Zünden der Lampe) ein dauerhaft über den Kondensator C1 fließender Strom I_{c} toleriert werden. Er ist durch die Verringerung des Kapazitätswerts von C1 verhältnismäßig klein.

Die Vorteile der vorliegenden Erfindung können wie folgt zusammengefasst werden:
- die Materialkosten für die Schaltung können verringert werden,
- das Ansteuerungsprinzip wird noch weiter vereinfacht, da kein Schaltvorgang bezüglich des Schalters S5 beim Stand der Technik vorgesehen sein muss,
- die maximale Zündspannung kann durch externe Bausteine, nämlich den Kondensator C1 des Serienresonanzkreises bestimmt werden,
- unter der Voraussetzung, dass der Kapazitätswert des Zusatzkondensators C_{N} größer ist als der der Kapazität des Serienresonanzkreises C1, ist das Auftreten eines kapazitiven Betriebs während der Zündung sicher vermieden,
- die Schaltungsanordnung ist bezüglich Hochspannungsdurchschlägen weniger empfindlich, da im Schaltkreis keine Halbleiterbauteile vorgesehen sind, und
- die Schaltungsanordnung ist gegenüber Sättigungserscheinungen der Zündspule L1 weniger empfindlich.

## Patentansprüche

1. Schaltungsanordnung zum Betreiben einer Gasentladungslampe,
mit einer Vollbrückenschaltung, an die eine Gleichspannung (U₀) angelegt ist und die vier steuerbare Schalter (S1 - S4) umfasst,
wobei ein erster Schalter (S1) mit einem zweiten Schalter (S2) und ein dritter Schalter (S3) mit einem vierten Schalter (S4) in Serie geschaltet sowie der erste Schalter (S1) mit dem dritten Schalter (S3) und der zweite Schalter (S2) mit dem vierten Schalter (S4) verbunden ist, und
wobei eine Gasentladungslampe (EL) in einem Brückenzweig, der einen Knotenpunkt zwischen dem ersten Schalter (S1) und dem zweiten Schalter (S2) mit einem Knotenpunkt zwischen dem dritten Schalter (S3) und dem vierten Schalter (S4) verbindet, anzuordnen ist,
und ein Serienresonanzkreis mit der Lampe gekoppelt ist, der eine in den Brückenzweig geschaltetete Induktivität (L₁) mit einer an einem Anzapfungspunkt daran angreifenden Kapazität (C₁) umfasst,
**gekennzeichnet, durch**
eine Zusatzkapazität (C_{N}), welche zwischen
• dem Verbindungspunkt der Kapazität (C₁) und der Induktivität (L₁) des Serienresonanzkreises sowie
• dem Verbindungspunkt des ersten mit dem zweiten Schalters, dem der Induktivität (L₁) des Serienresonanzkreises gegenüberliegenden Anschluß der Lampe oder dem Verbindungspunkt des dritten mit dem vierten Schalters verbunden ist,
wobei der Kapazitätswert der Zusatzkapazität (C_{N}) größer ist als der Kapazitätswert der Kapazität (C₁) des Serienresonanzkreises (C1, L1).

2. Schaltungsanordnung nach Anspruch 1,
**dadurch gekennzeichnet,**
**dass** eine Steuerschaltung vor dem Normalbetrieb der Gasentladungslampe eine Aufwärmphase der Gasentladungslampe durchführt, während abwechselnd der erste und vierte Schalter (S1, S4) und dazu komplementär der zweite und dritte Schalter (S2, S3) mit ein- und ausgeschaltet werden.

3. Schaltungsanordnung nach einem der vorherigen Ansprüche,
**dadurch gekennzeichnet,**
**dass** eine Steuerschaltung derart ausgestaltet ist, dass vor dem Normalbetrieb der Gasentladungslampe ein Zündbetrieb durchgeführt wird, um die Gasentladungslampe zu zünden,
wobei die Steuerschaltung während des Zündbetriebs den ersten und zweiten Schalter öffnet und den dritten und vierten Schalter abwechselnd mit einer Frequenz ein- und ausschaltet, die im Wesentlichen der Resonanzfrequenz des mit der Gasentladungslampe gekoppelten Serienresonanzkreises (L1, C_{N}) entspricht.

4. Schaltungsanordnung nach Anspruch 3,
**dadurch gekennzeichnet,**
**dass** die Steuerschaltung derart ausgestaltet ist, dass sie während des Zündbetriebs den dritten und vierten Schalter (S3, S4) zunächst mit einer höheren Frequenz als der Resonanzfrequenz des Serienresonanzkreises (L1, C1, C_{N}) ein- und ausschaltet und diese Frequenz anschließend in Richtung der Resonanzfrequenz des Serienresonanzkreises (L1, C1, C_{N}) absenkt.

5. Schaltungsanordnung nach Anspruch 3 oder 4,
**dadurch gekennzeichnet,**
**dass** die Steuerschaltung (1) derart ausgestaltet wird, dass sie ein Zünden der Gasentladungslampe (EL) erfasst und nach Erfassen der Zündung von dem Zündbetrieb in den Aufwärmbetrieb umschaltet.

6. Schaltungsanordnung nach Anspruch 4 oder 5,
**dadurch gekennzeichnet,**
**dass** die Steuerschaltung derart ausgestaltet ist, dass sie nach Erwärmung der Gasentladungslampe auf eine bestimmte Betriebstemperatur vom Aufwärmbetrieb in den Normalbetrieb umschaltet.

7. Schaltungsanordnung nach Anspruch 5 oder 6,
**dadurch gekennzeichnet,**
**dass** die Steuerschaltung zum Erfassen der Zündung der Gasentladungslampe (EL) die Zündspannung oder eine davon abhängige Größe erfasst.

8. Schaltungsanordnung nach Anspruch 7,
**dadurch gekennzeichnet,**
**dass** die Steuerschaltung zur Erfassung des Zündens der Gasentladungslampe (EL) die an dem Anzapfungspunkt zwischen der Kapazität (C1) und der Induktivität (L1) des Serienresonanzkreises abfallenden Spannung erfasst.

9. Schaltungsanordnung nach einem der Ansprüche 7 oder 8,
**dadurch gekennzeichnet,**
**dass** die Induktivität (L1) des Serienresonanzkreises derart dimensioniert ist, dass sie im Normalbetrieb in der Sättigung betrieben wird, so dass die Induktivität (L1) des Serienresonanzkreises im Normalbetrieb eine vernachlässigbare Induktivität bildet.

10. Schaltungsanordnung nach Anspruch 9,
**dadurch gekennzeichnet,**
**dass** die Induktivität (L1) des Serienresonanzkreises eine Spule mit einem Eisenkern umfasst, der im Normalbetrieb gesättigt ist.

11. Schaltungsanordnung nach einem der vorherigen Ansprüche,
**dadurch gekennzeichnet,**
**dass** mit dem Brückenzweig der Vollbrücke (S1-S4) eine Glättungsschaltung (L2, C2) gekoppelt ist.

12. Schaltungsanordnung nach Anspruch 11,
**dadurch gekennzeichnet,**
**dass** die Glättungsschaltung eine in Serie mit der Gasentladungslampe (EL) in dem Brückenzweig angeordnete Spule (L2) sowie eine zu der Gasentladungslampe (EL) parallel geschalteten Kondensator (C2) umfasst.

13. Schaltungsanordnung nach Anspruch 12,
**dadurch gekennzeichnet,**
**dass** der Kapazitätswert der Kapazität (C2) der Glättungsschaltung (L2, C2) größer ist als der Kapazitätswert der Zusatzkapazität (C_{N}).

14. Schaltungsanordnung nach einem der vorherigen Ansprüche,
**dadurch gekennzeichnet,**
**dass** die steuerbaren Schalter (S1-S4) der Vollbrückenschaltung Feldeffekttransistoren mit Freilaufdioden (D1) sind.

15. Schaltungsanordnung nach einem der vorherigen Ansprüche,
**dadurch gekennzeichnet,**
**dass** die Steuerschaltung für einen Normalbetrieb der Gasentladungslampe (EL) mit einer ersten Frequenz abwechselnd zwischen einem ersten und einem zweiten Zustand umschaltet, wobei während des ersten Zustands der erste und vierte Schalter (S1, S4) geöffnet sind, der zweite Schalter (S2) mit einer zweiten Frequenz, die höher als die erste Frequenz ist, abwechselnd ein- und ausgeschaltet wird und der dritte Schalter (S3) mindestens dann geschlossen ist, wenn auch der zweite Schalter (S2) geschlossen ist, und wobei während des zweiten Zustands der zweite und dritte Schalter (S2, S3) geöffnet sind, der erste Schalter (S1) mit der zweiten Frequenz abwechselnd ein- und ausgeschaltet wird und der vierte Schalter (S4) mindestens dann geschlossen ist, wenn auch der erste Schalter (S1) geschlossen ist.

16. Schaltungsanordnung nach Anspruch 15,
**dadurch gekennzeichnet,**
**dass** die Steuerschaltung einen in den Brückenzweig fließenden Zweigstrom überwacht und in dem ersten Zustand den zweiten Schalter bzw. in dem zweiten Zustand den ersten Schalter immer dann schließt, wenn der Zweigstrom einen minimalen Wert erreicht hat.

## Claims

1. Circuitry arrangement for the operation of a gas discharge lamp,
having a full-bridge circuit, to which a d.c. voltage (U₀) is applied and which includes four controllable switches (S1-S4),
wherein a first switch (S1) is connected in series with a second switch (S2), and a third switch (S3) is connected in series with a fourth switch (S4) and the first switch (S1) is connected with the third switch (S3) and the second switch (S2) is connected with the forth switch (S4), and wherein a gas discharge lamp (EL) is to be arranged in a bridge branch, which connects a node point between the first switch (S1) and the second switch (S2) with a node point between the third switch (S3) and the forth switch (S4),
and a series resonance circuit is coupled with the lamp, which includes an inductance (L₁) connected in the bridge branch with a capacitance (C₁) connecting thereto at a tapping point,
**characterized by**,
a supplementary capacitance (C_{N}), which is connected between
- the connection point of the capacitance (C₁) and the inductance (L₁) of the series resonance circuit and
- the connection point of the first with the second switch, the terminal of the lamp lying opposite to the inductance (L₁) of the series resonance circuit, or the connection point of the third with the fourth switch,
wherein the capacitance value of the supplementary capacitance (C_{N}) is greater than the capacitance value of the capacitance (C₁) of the series resonance circuit (C₁, L₁).

2. Circuitry arrangement according to claim 1,
**characterized in that**,
a control circuit carries out, before the normal operation of the gas discharge lamp, a warm-up phase for the gas discharge lamp, whilst alternatingly the first and forth switch (S1, S4), and complementary thereto the second and third switch (S2, S3), are together switched on and switched off.

3. Circuitry arrangement according to any preceding claim,
**characterized in that**,
a control circuit is so configured that before the normal operation of the gas discharge lamp, an ignition operation is carried out, in order ignite the gas discharge lamp,
wherein the control circuit, during the ignition operation, opens the first and second switches and switches on and switches off the third and forth switches alternatingly with a frequency which in substance corresponds to the resonance frequency of the series resonance circuit (L₁, C_{N}) coupled with the gas discharge lamp.

4. Circuitry arrangement according to claim 3,
**characterized in that**,
the control circuit is so configured that during the ignition operation it initially switches on and off the third and forth switches (S3, S4) with a higher frequency than the resonance frequency of the series resonance circuit (L₁, C₁, C_{N}) and then reduces this frequency in the direction of the resonance frequency of the series resonance circuit (L₁, C₁, C_{N}).

5. Circuitry arrangement according to claim 3 or 4,
**characterized in that**,
the control circuit (1) is so configured that it detects an ignition of the gas discharge lamp (EL) and after detection of the ignition switches from ignition operation into warm-up operation.

6. Circuitry arrangement according to claim 4 or 5,
**characterized in that**,
the control circuit is so configured that after warming-up of the gas discharge lamp to a certain operating temperature it switches from warm-up operation to normal operation.

7. Circuitry arrangement according to claim 5 or 6,
**characterized in that**,
the control circuit, for detecting the ignition of the gas discharge lamp (EL) detects the ignition voltage or a parameter dependent thereupon.

8. Circuitry arrangement according to claim 7,
**characterized in that**,
the control circuit, for detecting the ignition of the gas discharge lamp (EL), detects the voltage dropping at the tapping point between the capacitance (C₁) and the inductance (L₁) of the series resonance circuit.

9. Circuitry arrangement according to claim 7 or 8,
**characterized in that**,
the inductance (L₁) of the series residence circuit is so dimensioned that in normal operation it is operated in saturation, so that the inductance (L₁) of the series residence circuit forms in normal operation a negligible inductance.

10. Circuitry arrangement according to claim 9,
**characterized in that**,
the inductance (L₁) of the series resonance circuit includes a coil having an iron core, which in normal operation is saturated.

11. Circuitry arrangement according to any preceding claim,
**characterized in that**,
a smoothing circuit (L2, C2) is coupled with the bridge branch of the full bridge (S1-S4).

12. Circuitry arrangement according to claim 11,
**characterized in that**,
the smoothing circuit includes a coil (L2) arranged in the bridge branch in series with the gas discharge lamp (EL) and a capacitance (C2) connected in parallel to the gas discharge lamp (EL).

13. Circuitry arrangement according to claim 12,
**characterized in that**,
the capacitance value of the capacitance (C2) of the smoothing circuit (L2, C2) is greater than the capacitance value of the supplementary capacitance (C_{N}).

14. Circuitry arrangement according to any preceding claim,
**characterized in that**,
the controllable switches (S1-S4) of the full bridge circuit are field effect transistors with free running diodes (D1).

15. Circuitry arrangement according to any preceding claim,
**characterized in that**,
the control circuit, for a normal operation of the gas discharge lamp (EL), switches alternatingly between a first and a second condition with a first frequency, wherein during the first condition the first and fourth switches (S1, S4) are open, the second switch (S2) is alternatingly switched on and switched off with a second frequency, which is higher than the first frequency, and the third switch (S3) is at least then closed when the second switch (S2) is also closed, and wherein during the second condition the second and third switches (S2, S3) are open, the first switch (S2) is alternatingly switched on and switched off with the second frequency and the fourth switch (S4) is at least then closed when also the first switch (S1) is closed.

16. Circuitry arrangement according to claim 15,
**characterized in that**,
the control circuit monitors a branch current flowing in the bridge branch and in the first condition always closes the second switch, or in the second condition always closes the first switch, when the branch current has reached a minimal value.

## Revendications

1. Agencement de circuit pour faire fonctionner une lampe à décharge gazeuse,
avec un circuit à pont intégral auquel est appliquée une tension continue (U₀) et qui comprend quatre commutateurs commandables (S1 - S4),
un premier commutateur (S1) étant monté en série avec un deuxième commutateur (S2) et un troisième commutateur (S3) étant monté en série avec un quatrième commutateur (S4) et le premier commutateur (S1) étant relié au troisième commutateur (S3) et le deuxième commutateur (S2) étant relié au quatrième commutateur (S4), et une lampe à décharge gazeuse (EL) devant être placée dans un branchement de pont qui relie un point nodal entre le premier commutateur (S1) et le deuxième commutateur (S2) à un point nodal entre le troisième commutateur (S3) et le quatrième commutateur (S4),
et un circuit résonant série, qui comprend une inductance (L₁) montée dans le branchement de pont avec un condensateur (C₁) en prise dans celui-ci à un point de prise, étant couplé à la lampe,
**caractérisé par**
un condensateur additionnel (C_{N}) qui est relié entre le point de liaison du condensateur (C₁) et de l'inductance (L₁) du circuit résonant série et entre le point de liaison du premier commutateur et du deuxième commutateur, le raccord de la lampe opposé à l'inductance (L₁) du circuit résonant série ou le point de liaison entre le troisième commutateur et le quatrième commutateur,
la valeur de la capacité du condensateur additionnel (C_{N}) étant supérieure à la valeur de la capacité du condensateur (C₁) du circuit résonant série (C1, L1).

2. Agencement de circuit selon la revendication 1,
**caractérisé en ce que**
un circuit de commande effectue une phase de réchauffage de la lampe à décharge gazeuse avant le mode normal de la lampe à décharge gazeuse pendant que le premier et le quatrième commutateur (S1, S4) et, en complément, le deuxième et le troisième commutateur (S2, S3) sont alternativement mis en service et hors service.

3. Agencement de circuit selon l'une quelconque des revendications précédentes,
**caractérisé en ce** qui
un circuit de commande est configuré de telle manière qu'un mode allumage est effectué avant le mode normal de la lampe à décharge gazeuse pour allumer la lampe à décharge gazeuse,
dans lequel, pendant le mode allumage, le circuit de commande ouvre le premier et le deuxième commutateur et met alternativement le troisième et le quatrième commutateur en service et hors service à une fréquence qui correspond sensiblement à la fréquence de résonance du circuit résonant série (L1; C_{N}) couplé à la lampe à décharge gazeuse.

4. Agencement de circuit selon la revendication 3,
**caractérisé en ce que**
le circuit de commande est configuré de telle manière que, pendant le mode allumage, il met le troisième et le quatrième commutateur (S3, S4) en service et hors service d'abord à une fréquence plus élevée que la fréquence de résonance du circuit résonant série (L1, C1, C_{N}) et ensuite, il réduit cette fréquence dans la direction de la fréquence de résonance du circuit résonant série (L1, C1, C_{N}).

5. Agencement de circuit selon la revendication 3 ou 4,
**caractérisé en ce que**
le circuit de commande (1) est configuré de telle manière qu'il détecte un allumage de la lampe à décharge gazeuse (EL) et, après la détection de l'allumage, il est commuté entre le mode allumage et le mode réchauffage.

6. Agencement de circuit selon la revendication 4 ou 5,
**caractérisé en ce que**
le circuit de commande est configuré de telle manière qu'il est commuté entre le mode réchauffage et le mode de fonctionnement normal après le réchauffage de la lampe à décharge gazeuse jusqu'à une température de fonctionnement déterminée.

7. Agencement de circuit selon la revendication 5 ou 6,
**caractérisé en ce que**
le circuit de commande détecte la tension d'allumage ou une valeur dépendant de celle-ci pour la détection de l'allumage de la lampe à décharge gazeuse (EL).

8. Agencement de circuit selon la revendication 7,
**caractérisé en ce que**
pour la détection de l'allumage de la lampe à décharge gazeuse (EL), le circuit de commande détecte la baisse de tension au point de prise entre le condensateur (C₁) et l'inductance (L₁) du circuit résonant série.

9. Agencement de circuit selon l'une quelconque des revendications 7 ou 8,
**caractérisé en ce que**
l'inductance (L₁) du circuit résonant série est dimensionnée de telle manière qu'en mode normal elle fonctionne en saturation, de sorte que l'inductance (L₁) du circuit résonant série constitue une inductance négligeable en mode normal.

10. Agencement de circuit selon la revendication 9,
**caractérisé en ce que**
l'inductance (L₁) du circuit résonant série comprend une bobine avec un noyau de fer qui est saturé en mode normal.

11. Agencement de circuit selon l'une quelconque des revendications précédentes,
**caractérisé en ce que**
un circuit de lissage (L2, C2) est couplé au branchement de pont du pont intégral (S1-S4).

12. Agencement de circuit selon la revendication 11,
**caractérisé en ce que**
le circuit de lissage comprend une bobine (L2) disposée en série avec la lampe à décharge gazeuse (EL) dans le branchement de pont ainsi qu'un condensateur (C2) monté parallèlement à la lampe à décharge gazeuse (EL).

13. Agencement de circuit selon la revendication 12,
**caractérisé en ce que**
la valeur de la capacité du condensateur (C2) du circuit de lissage (L2, C2) est supérieure à la valeur de la capacité du condensateur additionnel (C_{N}).

14. Agencement de circuit selon l'une quelconque des revendications précédentes,
**caractérisé en ce que**
les commutateurs contrôlés (S1 - S4) du circuit à pont intégral sont des transistors à effet de champ avec des diodes de roue libre (D1).

15. Agencement de circuit selon l'une quelconque des revendications précédentes,
**caractérisé en ce que**
pour un fonctionnement normal de la lampe à décharge gazeuse (EL) à une première fréquence, le circuit de commande est commuté alternativement entre un premier et un deuxième état, le premier et le quatrième commutateur (S1, S4) étant ouverts dans le premier état, le deuxième commutateur (S2) étant alternativement mis en service et hors service à une deuxième fréquence qui est supérieure à la première fréquence et le troisième commutateur (S3) étant fermé au moins lorsque le deuxième commutateur (S2) est également fermé et le deuxième et le troisième commutateur (S2, S3) étant ouverts dans le deuxième état, le premier commutateur (S1) étant alternativement mis en service et hors service à la deuxième fréquence et le quatrième commutateur (S4) étant fermé au moins lorsque le premier commutateur (S1) est également fermé.

16. Agencement de circuit selon la revendication 15,
**caractérisé en ce que**
le circuit de commande contrôle un courant de branchement passant dans le branchement de pont et ferme toujours le deuxième commutateur dans le premier état ou le premier commutateur dans le deuxième état lorsque le courant de branchement a atteint une valeur minimale.
